# EUROPÄISCHE PATENTSCHRIFT

(11) **EP 2 340 641 B1**
(45) Veröffentlichungstag und Bekanntmachung des Hinweises auf die Patenterteilung: **20.04.2016**
(21) Anmeldenummer: 08802610.9
(22) Anmeldetag: 25.09.2008
(51) Int. Cl.: H04L 29/06

(54) **ÜBERTRAGEN VON TICKER-INFORMATION IM MULTIMEDIABEREICH**
TRANSMITTING MULTIMEDIA TICKER INFORMATION
TRANSMISSION D'INFORMATIONS DÉFILANTES DANS LE DOMAINE MULTIMÉDIA

(43) Veröffentlichungstag der Anmeldung: 06.07.2011
(73) Patentinhaber: Unify GmbH & Co. KG, 81379 München (DE)
(72) Erfinder: BOZIONEK, Bruno, 33178 Borchen (DE); KLAGHOFER, Karl, 81373 München (DE); PRANGE, Holger, 81373 München (DE); TIETSCH, Michael, 86916 Kaufering (DE)
(74) Vertreter: Fritzsche, Thomas
(86) Internationale Anmeldenummer: PCT/EP2008/008141
(87) Internationale Veröffentlichungsnummer: WO 2010/034328

(56) Entgegenhaltungen:
- WO-A-2005/041521
- WO-A-2006/117644
- WO-A-2006/124790
- US-A1- 2006 230 154

## Beschreibung

In Fernsehsendungen - insbesondere Nachrichtensendungen - werden zeitweise Ticker- Informationen eingeblendet. Mit Hilfe einer Ticker- Information werden zusätzliche Informationen einem Betrachter einer aktuell laufenden Fernsehsendung angezeigt. Ticker- Information kann beispielsweise eine Information über ein aktuelles Ereignis, Börsenkurse, Untertitel zu Fernsehsendungen oder Übersetzungen sein. Die Ticker-Information wird meist als bandförmige Laufschrift in das aktuelle Fernsehbild eingefügt.

Bei Video- Telefoniesystemen - beispielsweise Videokonferenzsystemen - wird zwischen den Endgeräten bzw. zwischen den Videokonferenzeinrichtungen einer Kommunikationsbeziehung ein Multimedia- Datenstrom über ein paketorientiertes Netzwerk übertragen, wobei vorzugsweise ein Netzwerkprotokoll eingesetzt wird, das für das Einrichten einer Kommunikationsbeziehung bzw. Session mit einem Multimedia- Datenstrom geeignet ist. Netzwerkprotokolle für paketorientierte Netzwerke basieren überwiegend auf dem IP- Protokoll.

US 2006/0230154 A offenbart ein Verfahren und Einheiten zur Durchführung einer Push-Sitzung in einem Kommunikationssystem unter Ausnutzung eines Protokolls wie etwa PLNM, GSM, GPRS, UMTS oder IP oder andere. Dabei wird eine Push-Nachricht wie etwa Börsenkurse von einem Push-Initiator an eine Gateway-Einrichtung übergeben, welche eine Push-Sitzung über SIP (Session Initiation Protocol) mit einem Benutzer-Agenten einleitet und die Übertragung des Push-Inhalts über MRSP (Message Session Relay Protocol) an den Benutzer-Agenten verwaltet. In der SIP-Sitzung werden mit Hilfe eines integrierten SDP-(Session Description Protocol)-Abschnitts Textteile zur Charakterisierung der MRSP-Sitzung wie etwa eine URL-Information der MRSP-Quelle auf einer Signalebene übertragen, während die MRSP-Sitzung mit dem Push-Inhalt selbst auf einer Benutzerebene stattfindet.

WO 2006/124790 A2 beschreibt, wie eine Videotelekonferenz-Sitzung durch SIP eingeleitet werden kann und wie eine dritte Partei über 3pcc (Third Party Call Control) mittels einer eigenen SIP-Prozedur eingebunden werden kann.

WO 2005/041521 A1 betrifft die Verwaltung und Anzeige von Stock-Ticker-Informationen und News-Sidebar-Informationen auf einem Computer-Bildschirm, wobei IP-Adressen eines Stock-Servers und eines News-Servers von einem Video-Server bereitgestellt werden.

Die der Erfindung zugrunde liegende Aufgabe besteht darin, aus unterschiedlichen Quellen bereitgestellte Ticker- Information mit geringem zusätzlichen Signalisierungs- und Übertragungsaufwand in Video- Telefoniesystemen, insbesondere parallel zu dem Video-Datenstrom, zu übertragen und dabei eine Anpassung an unterschiedliche Ausgabeeinrichtung zu ermöglichen. Die Aufgabe wird durch die Ansprüche 1 und 9 gelöst.

Ein wesentlicher Aspekt des erfindungsgemäßen Verfahrens ist darin zu sehen, dass die Übertragungs- Parameter für die Übertragung einer Ticker- Information während der Signalisierung der Übertragungs- Parameter für den Multimedia- Datenstrom für eine Session mit übertragen werden, wobei durch die Parameter ein zusätzlicher logischer Übertragungskanal für die Übertragung der Ticker- Information eingerichtet, das Übertragungsprotokoll und der Payload- Typ spezifiziert wird sowie eine Quellinformation eingefügt ist, die die Quelle der Ticker- Information anzeigt. Vorzugsweise ist für die Initialisierung einer Session ein standardisiertes SIP- Protokoll vorgesehen, in das ein standardisiertes Session Description Protocol für die Beschreibung und Verwaltung der durch ein SIP- Protokoll ausgehandelte Übertragungsparameter sowohl für die Multimedia- Datenströme als auch für die Ticker- Information eingefügt ist. Die Ticker- Information wird üblicherweise als ein Laufband von Text oder auch Multimedia- Information in eine Anzeigeeinrichtung wie Bildschirm eingefügt. Die Ticker- Information umfasst im Sinne der Erfindung jedoch alle möglichen Darstellungsarten von Text auf Videobildern. Beispielsweise kann der Text bzw. die Multimedia- Information auch von unten nach oben dargestellt werden, oder als "Overlay" über eine angezeigte Darstellung gelegt werden.

Ein wesentlicher Vorteil der Erfindung ist darin zu sehen, dass eine zusätzliche Information, die Ticker- Information zu den Multimedia- Datenströmen eines Telefoniesystems übertragen werden kann, wobei die zusätzliche Information aus unterschiedlichen Quellen wie beispielsweise von den an einer Kommunikationsbeziehung beteiligten Endgeräten wie beispielsweise Konferenzeinrichtungen oder von irgend einer Informationsquelle in einem Netzwerk, beispielsweise dem Internet, bereitgestellt werden kann. Ein weiterer Vorteil besteht darin, dass die Signalisierung für die zusätzliche Information mit geringstem zusätzlichen Signalisierungs- und Übertragungsaufwand in vorhandene Netzwerkprotokolle für paketorientierte Netzwerke implementiert werden kann.

Gemäß einer Weiterbildung der Erfindung wird die Quellinformation bzw. die Informationsquelle durch einen Uniform Ressource Identifier (URI) angegeben, der die Domain angibt, von welcher die Ticker- Information geliefert wird. Hierdurch können sehr umfangreiche Informationsquellen spezifiziert werden, die eine zusätzliche Information, insbesondere eine Ticker- Information bereitstellen können bzw. liefern können.

Gemäß einer vorteilhaften Übertragungsprotokoll wird zusätzlich der Port angegeben, über den die Ticker- Information übertragen wird und als Payload- Typen für die Ticker- Information ist ein xml-, html-, Text- oder Video - Payload- Typ vorgesehen. Erfindungsgemäß wird für die Wiedergabe der Ticker- Information in den den Endgeräten des Netzwerks zugeordneten Ausgabeeinrichtungen zusätzlich eine Formatierungsinformation und/oder eine die Ticker- Information an die Ausgabeeinrichtung anpassende Ausgabeinformation eingefügt werden. Hierdurch ist eine Anpassung an unterschiedliche Ausgabeeinrichtung wie beispielsweise Bildschirme oder LCD-Anzeigen möglich.

Weitere vorteilhafte Ausgestaltungen der Erfindung sowie eine vorteilhafte Kommunikationsanordnung für die Durchführung des erfindungsgemäßen Verfahrens sind den weiteren Ansprüchen zu entnehmen.

Im Folgenden werden die Erfindung und deren Weiterbildungen anhand einer zeichnerischen Darstellung näher erläutert.

Für das Ausführungsbeispiel sei angenommen, dass in einem Netzwerk LAN zwei Endgeräte E(1),E(2) eine Session S für eine Video- Telefon- Kommunikationsbeziehung aufbauen, um nach dem Aufbau der Session S zumindest jeweils einen Multimedia- Datenstrom mmd bidirektional zu übertragen - alternativ kann auch eine Session für eine unidirektional Übertragung aufgebaut werden. Beispielsweise kann eine derartige Kommunikationsbeziehung eine Videokonferenz zwischen zwei Parteien bzw. deren Endgeräte E(1),E(2) bzw. Konferenzeinrichtungen sein. Als Netzwerkprotokoll für den Aufbau einer Session für eine Video- Telefonie - Session - im weiteren als Session S bezeichnet - ist beispielweise ein standardisiertes SIP- Protokoll SIP (Session Initiation Protocol) vorgesehen - aktuell gemäß dem RFC- Standard 3261. Andere Netzwerkprotokolle für die Übertragung von Multimedia-Daten mmd sind alternativ möglich.

Für die Beschreibung bzw. Verwaltung der Eigenschaften bzw. Übertragungsparameter der Multimedia- Datenströme mmd einer Session S ist beispielsweise ein standardisiertes Session Description Protocol SDP vorgesehen - aktuell nach dem RFC-Standard 4566. Mit Hilfe des Session Description Protocols SDP werden die mit Hilfe des SIP- Protokolls SIP ausgehandelten Übertragungsparameter der Multimedia- Datenströme mmd beschrieben und für die Dauer einer Session S verwaltet.

Im Folgenden ist beispielhaft ein Protokollauszug aus einem Session Description Protocol SDP dargestellt, in das erfindungsgemäß die Übertragungsparameter für eine zu übertragende Ticker- Information ti eingefügt werden:
V=0
1)
   O=alice 2890844526 2890844526 IN IP4 alice.enterprise.com
2)
   s=-
3)
   c=IN IP4 192.0.2.1.101
4)
   m=audio 49172 RTP/AVP 0
5)
   a=rtpmap:0 PMCU/8000
6)
   m=video 4200 RTP/AVP 111 112 34
7)
   a=rtpmap:111 H264/90000
8)
   a=rtpmap:112 H264/90000
9)
   a=fmtp 111 profile-level-id=428010;packetization-mode=0
10)
   a=fmtp 112 profile-level-id=428010;packetization-mode=1
11)
   Erfindungsgemäße Ergänzung:
   m=ticker 4299 udp 555 666 777 888
12)
   a=rtpmap: 555 ticker_xml
13)
   a=rtpmap: 666 ticker_html
14)
   a=rtpmap: 777 ticker_plaintext
15)
   a=rtpmap: 888 ticker_video
16)
   a=fmtp 666 URL=news.enterprise.com/ticker
17)

Erläuterungen zum Protokollauszug SDP:
1) Gibt die Protokollversion an
2) Beschreibt den Ursprung einer Session und definiert die Session;
   2890844526= Sitzungsnummer;
3) s= Name der Session, im Ausführungsbeispiel kein Name
4) c= Verbindungsdaten: IN zeigt Netztyp Internet an,
   IP4= Internetprotokoll Typ4, 192.0.2.1.101 = IP- Adresse;
5) m= Datenstrom vom Typ Audio;
   49172 = Portnummer;
   RTP/AVP = Real Time Protokoll ist Transportprotokoll für Audio- und Videokonferenzen, 0= Payloadtyp 0;
6) a= Attribute zu Audio- Datenstrom;
   rtpmap:0 PCMU/8000 ist Payloadtyp 0 sowie Kodierungsparameter für Audio- Datenstrom;
7) m= zwei Datenströme vom Typ Video mit Payloadtyp 111 und 112;
   4200 ist Portnummer;
   RTP/AVP = Real Time Protokoll ist Transportprotokoll für Audio- und Videokonferenzen, 111, 112= Payloadtypen 111,112;
8) rtpmap:111 ist Payloadtyp 111;
   H264/90000 ist erster Video- Datenstrom im standardisierten Form H.264;
9) rtpmap:112 ist Payloadtyp 112;,
   H264/90000 ist zweiter Video- Datenstrom im standardisierten Form H.264;
10) fmtp: 111 formatspezifische Parameter für Payloadtyp 111 Profile-level-id=428010 zeigt das Profil an, das der Codec für die Dekodierung des komprimierten Video- Datenstroms unterstützt und den höchsten Level der signalisierten Profile an;
   packetization-mode-1 gibt den Paketierungsmodus für den nach H.264 formatierten Video- Datenstrom an;
11) wie 10) jedoch für Payloadtyp 112;
12) m=ticker 4299 udp 555 666 777 888,
   m= Ticker- Datenstrom (zeigt an, dass die folgenden Attribute sich auf einen Datenstrom vom Typ Ticker beziehen; der Datenstrom vom Typ Ticker ist ein zusätzlicher Typ zu den vorhergehend angegebenen Datenströme vom Typ Audio und Typ Video);
   4299 ist Portnummer;
   udp 555 666 777 888 = standardisiertes Übertragungsprotokoll ist das User Data Protocol UDP mit den unterschiedlichen Payloadtypen 555 666 777 888,
13) a=rtpmap: 555 ticker_xml ist ein dynamischer Payloadtyp 555, der ein XML- formatierter Ticker- Datenstrom ist;
14) a=rtpmap: 666 ticker_xml ist ein dynamischer Payloadtyp 666, der ein HTML- formatierter Ticker- Datenstrom ist;
15) a=rtpmap: 777 ticker_plaintext ist ein dynamischer Payloadtyp 777, der ein gemäß einem ASCII-Code formatierter Ticker- Datenstrom ist; (Weitere Ticker-Datenstrom-Formate sind ebenfalls möglich (im Ausführungsbeispiel nicht dargestellt);
16) a=rtpmap: 888 ticker_video ist ein dynamischer Payloadtyp 88, der ein aufbereiteter Ticker- Datenstrom im Videoformat ist.
17) fmtp 666 URL=news.enterprise.com/ticker
   Für den Payloadtyp 666 sind folgende Payload- spezifische Parameter angegeben: Universal Ressource Locator URL, gibt die Quelle bzw. die Informationsquelle des Ticker- Datenstroms bzw. der Ticker- Information ti an, von der die Ticker- Information ti im HTLM- Format geliefert bzw. bereitgestellt wird. Die URL stellt insbesondere eine Adresse oder Identifier in einem Netzwerk mit IP- Protokoll dar. Die Ticker- Information ti kann von einem Endgerät E auch unter dieser URL abgeholt werden und beispielsweise entsprechend in ein Videobild auf einer Anzeigeeinheit im Bereich des Endgeräts oder im Endgerät - beispielsweise ein Bildschirm einer Konferenzeinrichtung eingefügt bzw. eingeblendet werden.

Die Payloadtypen 555, 666, 777, 888 sind beispielhaft angegeben, d.h. im konkreten Fall wird nur einer der Payloadtypen im Session Description Protocol SDP zusammen mit einer die Quelle der Ticker- Information ti anzeigenden Quellinformation angegeben.

Für das Ausführungsbeispiel sei angenommen, dass die Ticker-Information ti bzw. der Ticker- Datenstrom von einer TickerEinrichtung TE im Internet bereitgestellt und als Ticker-Datenstrom an ein Endgerät E des Netzwerks LAN bzw. an eine Konferenzeinrichtung übertragen wird. Des Weiteren ist für das Ausführungsbeispiel angenommen, dass eine Session S vom ersten Endgerät E(1) über ein Enterprise-System ES - beispielsweise eine Serverstruktur in dem lokalen Netzwerk LAN - eingeleitet wird- nicht dargestellt.

Hierzu wird im ersten Endgerät E(1) gemäß dem SIP- Protokoll SIP eine INVITE- Meldung INVITE gebildet und an das Enterprise-System ES übermittelt. In einer gemäß dem RFC- Standard 3261 gebildeten SIP- Meldung INVITE ist im Wesentlichen Information über Nachrichtentyp, Zieladresse, SIP- Version, SIP- Adresse, Portnummer und das Transportprotokoll für die Rückantworten auf die Meldung angegeben.

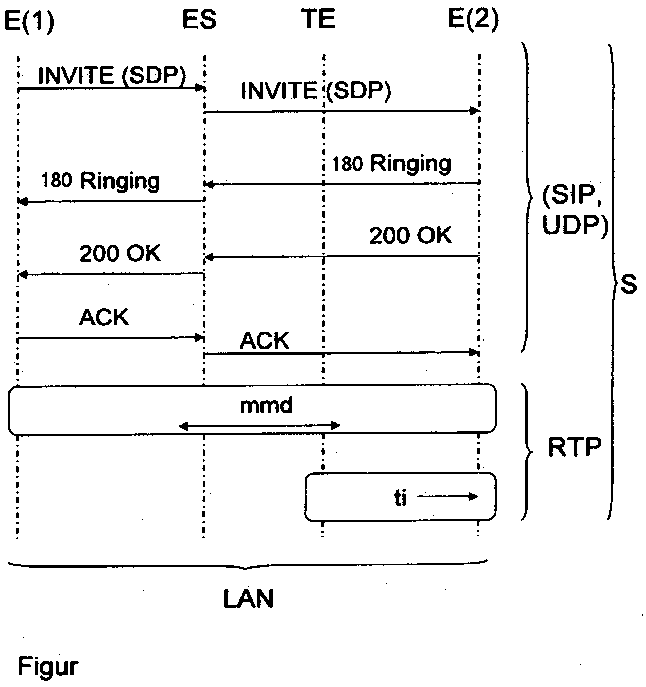

In dem in das SIP- Protokoll SIP eingebetteten Session Description Protocol SDP werden entsprechend den vorhergehenden Erläuterungen die Übertragungsparameter für die Multimedia- Datenströme mmd - Video- und Audio-Datenströme - für die Session S mit Video- Audio-Datenübertragung beschrieben - in der Figur durch die Bezeichnung INVITE (SDP) angedeutet. Erfindungsgemäß werden zusätzlich in das Session Description Protocol SDP die Übertragungsparameter für die Übertragung der Ticker-Information ti eingefügt, wobei eine Ticker- Einrichtung TE im Internet durch den Universal Ressource Identifier URI adressiert ist.

Das Enterprise- System ES vermittelt die INVITE- Meldung INVITE einschließlich des eingebetteten Session Description Protocols SDP über das lokale Netzwerk LAN an das zweite Endgerät E(2) - in der Figur einen durch mit INVITE (SDP) bezeichneten Pfeil angedeutet. Im zweiten Endgerät E(2) wird gemäß dem SIP- Protokoll SIP eine 180 Ringing- Meldung 180 Ringing gebildet und über das Enterprise- System ES an das erste Endgerät E(1) übermittelt - in der Figur durch mit 180 Ringing bezeichnete Pfeile angedeutet. Durch diese 180 Ringing- Meldung 180 Ringing wird dem Enterprise-System ES bzw. dem ersten Endgerät E(1) angezeigt, dass das zweite Endgerät E(2) bzw. eine Konferenzeinrichtung am zweiten Endgerät E(2) - nicht dargestellt - in dem lokalen Netzwerk LAN ermittelt werden konnte.

Anschließend wird im zweiten Endgerät E(2) gemäß dem SIP-Protokoll SIP eine 200 OK- Meldung 200 OK gebildet und über das Enterprise-System ES an das erste Endgerät E(1) übermittelt - in der Figur durch mit OK 200 bezeichnete Pfeile angedeutet. Durch diese 200 OK- Meldungen 200 OK wird dem Enterprise-System ES und dem ersten Endgerät E(1) angezeigt, dass das zweite Endgerät E(2) eine Initialisierung der signalisierten Session S akzeptiert hat. Daraufhin wird im ersten Endgerät E(1) gemäß dem SIP- Protokoll SIP eine ACK- Meldung ACK gebildet und über das Enterprise-System ES und das lokale Netzwerk LAN an das zweite Endgerät E(2) übermittelt. Hierdurch wird dem zweiten Endgerät E(2) die Übermittlung der 200 OK- Meldung OK 200 bestätigt.

Mit Hilfe der nun ausgehandelten Adressen und Übertragungsprotokolle sowie Übertragungsparameter wird die Session S eingerichtet und die bidirektionale Übertragung der Multimedia-Datenströme mmd kann beginnen.

Gemäß dem Ausführungsbeispiel wird die Ticker- Information ti von einer Tickereinrichtung TE bereitgestellt und wird gemäß dem im SDP- Protokoll SDP angegebenen Übertragungsprotokoll und den ausgehandelten Übertragungsparametern an das zweite Endgerät E (2) über das lokale Netzwerk LAN übertragen. Da die Tickereinrichtung TE beispielhaft im Internet angeordnet ist, sei für das Ausführungsbeispiel angenommen, dass von dem lokalen Netzwerk LAN auf das Internet zugegriffen werden kann - nicht dargestellt. Alternativ kann Tickereinrichtung TE auch im lokalen Netzwerk LAN angeordnet sein.

Vorteilhaft wird die Ticker- Information ti mit Hilfe des im zweiten Endgerät E(2) verfügbaren Universal Ressource Locators URL eine logische Verbindung zur Tickereinrichtung TE im Internet aufgebaut und die dort die bereitgestellte Ticker-Information ti abgeholt.

Alternativ kann die Ticker- Information ti auch durch eines der beiden Endgeräte E(1),E(2) bereitgestellt und an die in die Kommunikationsbeziehung einbezogenen Endgeräte E verteilt oder von diesen abgeholt werden, wobei als Quelle das die Ticker- Information ti bereitstellende Endgerät E in dem Session Description Protocol SDP beschrieben ist.

Im zweiten Endgerät E(2), beispielsweise eine Konferenzeinrichtung, werden an einer Anzeigeeinrichtung bzw. einem Bildschirm die Multimedia- Datenströme mmd als Video-Bild wiedergegeben. Die Ticker- Information ti wird üblicherweise bandförmig als Laufschrift in das laufende Video-Bild eingeblendet. Für das Einblenden kann eine Technik vorgesehen werden, die bereits für das Einblenden einer Ticker- Information ti in Fernsehbildschirme eingesetzt wird. Alternativ ist eine beliebige Einblendung der Ticker- Information ti möglich - beispielsweise in einem nicht bandförmig ausgestalteten, vorgegebenen Bereich des Bildschirms oder im ganzen Bildschirm.

Das erfindungsgemäße Verfahren ist nicht auf das Ausführungsbeispiel beschränkt, sondern kann auch für die Rückübertragung von zusätzlicher Information im Sinne einer Ticker-Information - beispielsweise Televoting bei Video-Konferenzen - von einem Endgerät an die an einer Kommunikationsbeziehung beteiligten Endgeräte eingesetzt werden. Auch könnte die Ticker- Information an andere IP- Adressen bzw. Endgeräte und Einrichtungen wie Telefon oder Personalcomputer gesendet werden, wobei die anderen Einrichtungen im Sinne einer Tickereinrichtung agieren. Zusätzlich können als Übertragungsparameter in das Session Description Protocol Ausgabeinformationen eingefügt werden, die bei der Wiedergabe der Ticker-Information eine Anpassung an die Anzeigeeinrichtungen der Endgeräte bewirken, beispielsweise Formatierungsinformation, Renderinformation, Filterinformation und Geschwindigkeitsanpassungsinformation.

## Patentansprüche

1. Verfahren zum Übertragen zumindest einer Ticker- Information (ti) über ein paketorientiertes Netz, wie beispielsweise ein LAN, mit zumindest einem durch ein Netzwerkprotokoll (SIP) signalisierten Multimedia- Datenstrom (mmd) an Endgeräte (E(1),E(2)) eines Multimediasystems,
- wobei Übertragungs- Parameter für die Übertragung einer Ticker- Information (ti) und Übertragungs- Parameter für zumindest einen Multimedia- Datenstrom (mmd) für eine Session (S) an wenigstens ein Endgerät übertragen werden,
- wobei durch die Übertragungs- Parameter für die Übertragung der Ticker- Information (ti) zumindest ein Übertragungsprotokoll (RTP) und zumindest ein Payload-Typ spezifiziert wird sowie zumindest eine Quellinformation eingefügt ist, die die Quelle einer Ticker- Information (ti) anzeigt,
- wobei die Übertragungs- Parameter für die Übertragung der Ticker- Information (ti) während der Signalisierung der Übertragungs- Parameter für den zumindest einen Multimedia- Datenstrom (mmd) für eine Session (S) mit übertragen werden,
**dadurch gekennzeichnet,**
**dass** für die Wiedergabe der Ticker- Information (ti) in den den Endgeräten (E(1),E,(2)) des Netzwerks zugeordneten Ausgabeeinrichtungen zusätzlich eine Formatierungsinformation und/oder eine die Ticker- Information (ti) an die Ausgabeeinrichtung anpassende Ausgabeinformation eingefügt ist.

2. Verfahren nach Anspruch 1, **dadurch gekennzeichnet,**
**dass** als Quellinformation ein Uniform Ressource Identifier, URI, eingefügt ist, der die Adresse der Datenquelle angibt, bei der die Ticker- Information (ti) bereitgestellt wird.

3. Verfahren nach einem der Ansprüche 1 oder 2, **dadurch gekennzeichnet,**
**dass** mit dem Übertragungsprotokoll jeweils der Port angegeben ist, über den die jeweilige Ticker-Information (ti) übertragen wird.

4. Verfahren nach einem der vorhergehenden Ansprüche, **dadurch gekennzeichnet,**
**dass** als Payload- Typ für die jeweilige Ticker- Information (ti) ein xml-, html-, Text- oder Video - Payload- Typ vorgesehen ist.

5. Verfahren nach einem der vorhergehenden Ansprüche, **dadurch gekennzeichnet,**
**dass** die gemäß dem angezeigten Übertragungsprotokoll wie beispielsweise RTP oder UDP , übertragene Ticker- Information (ti) in den Endgeräten (E(1),E(2)) des Netzwerks (LAN) zugeordneten Ausgabeeinrichtungen als Ticker- Information (ti) zusammen mit dem übertragenen, zumindest einen Multimedia- Datenstrom (mmd) wiedergegeben wird.

6. Verfahren nach Anspruch 5, **dadurch gekennzeichnet,**
**dass** die Ticker- Information (ti) bandförmig als Laufinformation oder in einen vorgegebenen Bereich in einen den zumindest einem Multimedia- Datenstrom (mmd) wiedergebenden Bildschirm der Ausgabeeinrichtung einfügt wird.

7. Verfahren nach einem der vorhergehenden Ansprüche, **dadurch gekennzeichnet,**
**dass** das Netzwerkprotokoll gemäß einem standardisierten SIP-Protokoll (SIP) oder einem für die Übertragung von Multimedia- Datenströmen (mmd) geeigneten Protokoll realisiert ist.

8. Verfahren nach Anspruch 4, **dadurch gekennzeichnet,**
**dass** für die Beschreibung und Verwaltung der Ticker- Information (ti) ein standardisiertes Session Description Protokoll SDP und für deren Transport ein standardisiertes User Data Protcol UDP oder ein Transmission Control Protocol, TCP, oder ein Transport Layer Security Protocol, TLS, oder ein Datagram Transport Layer Security Protocol, DTLS, oder ein standardisiertes Real Time Protocol, RTP, vorgesehen ist.

9. Kommunikationsanordnung mit einem paketorientierten Netzwerk, wie beispielsweise ein LAN, mit Endgeräten (E(1),E(2)) und mit einem Netzwerkprotokoll (SIP) zur Signalisierung mindestens eines Multimedia- Datenstroms (mmd) zwischen den Endgeräten (E(1),E(2)) eines Multimediasystems, ausgestaltet zum Durchführen zumindest einer der vorhergehenden Ansprüche 1 bis 8.

## Claims

1. Method for transmitting at least one ticker information (ti) via a packet-oriented network, such as a LAN, for example, with at least one multimedia data stream (mmd) signaled by a network protocol (SIP) to terminals (E(1), E(2)) of a multimedia system,
- wherein transmission parameters for the transmission of ticker information (ti) and transmission parameters for at least one multimedia data stream (mmd) for a session (S) are transmitted to at least one terminal,
- wherein, by means of the transmission parameters for the transmission of the ticker information (ti) at least one transmission protocol (RTP) and at least one payload type are specified, and at least one source information is inserted,
which displays the source of ticket information (ti),
- wherein the transmission parameters for the transmission of the ticker information (ti) during the signaling of the transmission parameters are transmitted for the at least one multimedia data stream (mmd) for a session (S),
**characterized in**
**that**, for the playback of the ticker information (ti), in the display devices associated with the terminals (E(1), E(2)) of the network, formatting information and/or display information adjusting the ticker information (ti) to the display device is inserted, in addition.

2. Method according to Claim 1, **characterized in**
**that**, as source information, a Uniform Resource Identifier, URI, is inserted, which indicates the address of the data source at which the ticker information (ti) is provided.

3. Method according to either Claim 1 or 2, **characterized in**
**that**, with the transmission protocol, in each case the port is indicated through which the respective ticker information (ti) is transmitted.

4. Method according to any one of the preceding claims, **characterized in**
**that**, as payload type for the respective ticker information (ti), an xml payload, an html payload, a text payload or a video payload is provided.

5. Method according to any one of the preceding claims, **characterized in**
**that** the ticker information (ti) transmitted according to the indicated transmission protocol such as RTP or UDP, for example, is reconstructed in the display devices associated with the terminals E(1), E(2)) of the network (LAN) as ticker information (ti) together with the transmitted at least one multimedia data stream (mmd).

6. Method according to Claim 5, **characterized in**
**that** the ticker information (ti) is inserted in the form of a tape as crawling information or in a predetermined area in a screen of the display device, which reconstructs the at least one multimedia data stream (mmd).

7. Method according to any one of the preceding claims, **characterized in**
**that** the network protocol is implemented according to a standardized SIP protocol (SIP) or a protocol suitable for the transmission of multimedia data streams (mmd).

8. Method according to Claim 4, **characterized in**
**that**, for the description and management of the ticker information (ti), a standardized Session Description Protocol SDP, or, for their transport, a standardized User Data Protocol UDP or a Transmission Control Protocol, TCP, or a Transport Layer Security Protocol, TLS, or a Datagram Transport Layer Security Protocol, DTLS, or a standardized Real Time Protocol, RTP, is provided.

9. Communication arrangement with a packet-oriented network, such as a LAN, for example, with terminals (E(1), E(2)), and with a network protocol (SIP) for signaling at least one multimedia data stream (mmd) between the terminals (E(1), E(2)) of a multimedia system, designed for carrying out at least one of the preceding Claims 1 to 8.

## Revendications

1. Procédé servant à transmettre au moins une information défilante (ti) par l'intermédiaire d'un réseau orienté paquets, tel qu'un réseau LAN, avec au moins un flux de données multimédia (mmd) signalisé par un protocole de réseau (SIP) à des terminaux (E(1), E(2)) d'un système multimédia,
- sachant que des paramètres de transmission pour la transmission d'une information défilante (ti) et des paramètres de transmission pour au moins un flux de données multimédia (mmd) pour une session (S) sont transmis à au moins un terminal,
- sachant qu'au moins un protocole de transmission (RTP) et au moins un type de données utiles sont spécifiés par les paramètres de transmission pour la transmission de l'information défilante (ti) et qu'au moins une information source est également insérée, laquelle affiche la source d'une information défilante (ti),
- sachant que les paramètres de transmission pour la transmission de l'information défilante (ti) sont transmis au cours de la signalisation des paramètres de transmission pour le flux de données multimédia (mmd) au moins au nombre de un pour une session (S),
**caractérisé en ce**
**qu'**en supplément une information de formatage et/ou une information d'édition adaptant l'information défilante (ti) au dispositif d'édition sont insérées, pour la reproduction de l'information défilante (ti), dans les dispositifs d'édition associés aux terminaux (E(1), E(2)) du réseau.

2. Procédé selon la revendication 1, **caractérisé en ce qu'**un identificateur de ressource uniforme (Uniform Ressource Identifier, URI) est inséré en tant qu'information source, lequel indique l'adresse de la source de données, dans laquelle l'information défilante (ti) est fournie.

3. Procédé selon l'une quelconque des revendications 1 ou 2, **caractérisé en ce**
**que** le port est respectivement indiqué avec le protocole de transmission, par l'intermédiaire duquel l'information défilante (ti) respective est transmise.

4. Procédé selon l'une quelconque des revendications précédentes,
**caractérisé en ce**
**qu'**un type de données utiles xml, html, text ou vidéo est prévu en tant que type de données utiles pour l'information défilante respective (ti).

5. Procédé selon l'une quelconque des revendications précédentes, **caractérisé en ce**
**que** l'information défilante (ti) transmise selon le protocole de transmission affiché, tel que RTP ou UDP, est reproduite conjointement avec le flux de données multimédia (mmd) transmis au moins au nombre de un, en tant qu'information défilante (ti), dans des dispositifs d'édition associés aux terminaux (E(1), E(2)) du réseau (LAN).

6. Procédé selon la revendication 5, **caractérisé en ce que** l'information défilante (ti) est insérée sous forme de bande en tant qu'information passante ou dans une zone prédéfinie sur un écran, reproduisant le flux de données multimédia (mmd) au moins au nombre de un, du dispositif d'édition.

7. Procédé selon l'une quelconque des revendications précédentes, **caractérisé en ce**
**que** le protocole de réseau est réalisé selon un protocole SIP standardisé (SIP) ou selon un protocole convenant à la transmission de flux de données multimédia (mmd).

8. Procédé selon la revendication 4, **caractérisé en ce que** sont prévus, pour la description et la gestion de l'information défilante (ti), un protocole de description de session standardisé (Session Description Protocol, SDP) et, pour son transport, un protocole de données d'utilisateur standardisé (User Data Protocol, UDP) ou un protocole de contrôle de transmission (Transmission Control Protocol, TCP) ou un protocole de sécurité de couche de transport (Transport Layer Security Protocol, TLS) ou un protocole de sécurité de couche de transport de datagrammes (Datagram Transport Layer Security, DTLS), ou un protocole en temps réel standardisé (Real Time Protocol, RTP).

9. Ensemble de communication comprenant un réseau orienté paquets, tel qu'un réseau LAN, comprenant des terminaux (E(1), E(2)) et un protocole de réseau (SIP) servant à la signalisation au moins d'un flux de données multimédia (mmd) entre les terminaux (E(1), E(2)) d'un système multimédia, configuré aux fins de la mise en oeuvre du procédé selon au moins l'une quelconque des revendications précédentes 1 à 8.
